# DEMANDE DE BREVET EUROPEEN

(11) **EP 2 058 039 A1**
(43) Date de publication de la demande: **13.05.2009**
(21) Numéro de dépôt: 07291338.7
(22) Date de dépôt: 07.11.2007
(51) Int. Cl.: B01D 17/02

(54) **Procédé de traitement d'absorbants biodégradables imprégnés de polluants fluides, ainsi que procédé et dispositif de récupération comportant un tel traitement**

(71) Demandeur: Courtigne, Jacky, 18320 Jouet sur l'Aubois (FR)
(72) Inventeur: Courtigne, Jacky, 18320 Jouet sur l'Aubois (FR)
(74) Mandataire: Novagraaf IP

(57) **Abrégé**

La présente invention apporte une solution au traitement des absorbants à base de fibres biodégradables après avoir dépollué des fluides, des sols ou autres surfaces de leur pollution, ainsi que lors de la récupération des polluants dans un récupérateur.

Pour ce faire, l'invention prévoit de traiter les absorbants imprégnés de polluants fluides, en particulier d'hydrocarbures, par séparation unique entre les absorbants et les polluants fluides et recyclage des absorbants et des polluants séparés puis reconditionnés.

La séparation est effectuée par exemple dans une centrifugeuse comportant un corps (23) entraîné par un moteur principal (25), une canne d'alimentation (21) au centre d'une vis sans fin (22) entraînée par un moto-réducteur 24. Le corps (23) a une partie cylindrique 230 et une partie conique 231. Les granulés 10, plaqués contre la paroi intérieure du corps 23 et expurgés, sont évacués vers la partie conique 231, puis sortent par des buses 26 et sont recueillis dans un conteneur de conditionnement 27. Le liquide composé d'hydrocarbures est récupéré par des ouïes 28 et déversé dans un conteneur approprié 29.

L'absorbant peut être utilisé comme dépolluant d'hydrocarbures bruts dans un récupérateur avant d'être centrifugé ou compressé pour pouvoir être recyclé.

## Description

L'invention se rapporte à un procédé de traitement d'absorbants biodégradables imprégnés de polluants fluides, en particulier d'hydrocarbures, afin de permettre la réutilisation des absorbants et des polluants, ainsi qu'un procédé de récupération et un récupérateur de polluants par les absorbants végétaux comportant ce traitement.

La présente invention concerne le domaine du nettoyage des sols pollués ou des surfaces aqueuses polluées, lorsque l'utilisation de diluants et de détergents est à éviter, dans un souci d'écologie en particulier. Elle concerne aussi l'amélioration de l'entretien des récupérateurs d'hydrocarbures.

Nombreuses sont les techniques actuelles de nettoyage des eaux souillées, des objets ou sols pollués.

Pour le nettoyage des sols souillés par des hydrocarbures ou par d'autres polluants (huiles de vidange d'engins à moteur, ou renversements accidentels par exemple), ou pour les zones aqueuses souillées (lacs, rivières, mers), la principale méthode de récupération des hydrocarbures se fait par dispersion de matière absorbante, apte à collecter la plus grande partie des hydrocarbures. Cette matière peut être de la mousse phénolique en flocons, de la tourbe végétale en fibres, des flocons ou des fibres de cellulose, des granulats de polyuréthane, des filaments ou des flocons de polypropylène,

Cette méthode permet d'éviter ou de retarder l'utilisation de détergents, mais a cependant un inconvénient majeur : les absorbants imprégnés de matières polluantes sont à leur tour des déchets à éliminer, et constituent donc une autre pollution, Ils sont alors généralement détruits par pyrolyse.

Pour le nettoyage des eaux de ruissellement issues de zones souillées (parkings, zones industrielles,.... ), ou des eaux de lavage (lavages de véhicules, par exemple), les séparateurs d'hydrocarbures sont fréquemment utilisés pour isoler une phase huileuse d'eaux purifiées qui pourront être rejetées dans l'environnement ou dans les égouts, si les normes de rejet sont respectées, - soit un maximum de 100 mg d'hydrocarbure/litre pour un rejet en classe I, pour un rejet dans les égouts par exemple, et de 5 mg/litre en classe II, pour un rejet par exemple en site classé ou dans la nature-.

Les séparateurs d'hydrocarbure permettent ainsi un recyclage des eaux utilisées, mais ils présentent certains inconvénients. Par exemple, durant la période de décantation, ils laissent souvent évaporer des Composés Organiques volatils (COV) polluants, et leur nettoyage est fréquent (fréquence en fonction du type de séparateur et de la concentration en polluants), et délicat à réaliser (isoler le séparateur, le vidanger en récupérant les boues d'une part et les huiles d'autre part, le nettoyer, et le remettre en eau).

Des améliorations pour diminuer ou supprimer les émissions de COV ont été apportées par les séparateurs d'hydrocarbures équipés d'un toit fixe. Un séparateur d'hydrocarbures n'émet pas de COV, mais l'existence d'un ciel gazeux au-dessus de la cuve est dangereuse ; le séparateur peut aussi être équipé d'un toit mobile, posé sur la surface du liquide stocké, mais dans ce cas des pertes gazeuses (COV, en particulier) peuvent exister entre les bords du toit flottant et les parois verticales du séparateur.

Une autre amélioration, apportée par le brevet FR2863907, consiste en un séparateur d'hydrocarbures à toit fixe, mais sans ciel gazeux grâce à une construction particulière de séparateur : les niveaux relatifs des orifices d'entrée et de sortie sont plus élevés que le niveau interne du toit fixe. Les éventuelles émanations de COV forment des poches gazeuses sous le toit fixe, à évacuer grâce à des évents situés à travers ce toit fixe.

Cependant, les dispositifs décrits ci-dessus ne permettent pas de réduire les volumes de déchets polluants, rapidement, sans solvant rajouté et de manière économe, ce qui est hautement souhaitable dans un souci d'écologie ; ainsi :
- les hydrocarbures ou autres polluants, une fois enlevés des surfaces polluées (surfaces solides ou aqueuses), polluent de manière aussi importante les matériaux absorbants qui les ont absorbés, et la solution est souvent l'incinération de l'ensemble absorbant et polluant;
- les séparateurs d'hydrocarbures ont des nettoyages trop fréquents et coûteux, et génèrent souvent une quantité trop importante de COV.

La présente invention vise à pallier les inconvénients de l'état de la technique, à partir de matériaux absorbants à base de fibres végétales permettant une absorption de polluants pour limiter l'émission de COV, par une unique opération de séparation des absorbants. Il a en effet été constaté de manière surprenante que de tels absorbants se séparent facilement des polluants fluides qu'ils ont absorbés par une unique opération de séparation.

Plus précisément, l'invention a pour objet un procédé de traitement d'absorbants à base de fibres végétales imprégnées de polluants fluides, en particulier d'hydrocarbures, comportant une étape de séparation unique par pression entre les absorbants et les polluants fluides et une étape de recyclage des absorbants séparés puis reconditionnés ainsi que, parallèlement, une étape de réutilisation des polluants séparés et reconditionnés.

Cette opération de séparation unique permet d'éviter l'incinération de l'ensemble absorbants et polluants, tout en recyclant d'une part l'absorbant reconditionné et, d'autre part, les hydrocarbures récupérés. L'absorbant est alors soit réutilisable pour une nouvelle dépollution, soit recyclable dans la filière bois comme combustible, avec un faible taux de résidu et donc un bon indice PCI (Pouvoir Calorifique Inférieur), soit biodégradé. Les polluants (hydrocarbures, huiles, ...) sont récupérés, sans l'aide de solvant, et sont ainsi directement réutilisables.

En particulier, la séparation est particulièrement performante lorsque les absorbants à base de fibres végétales, en particulier de cellulose, se présentent sous forme de couches constituant un matelas, de boudins, de feuilles ou de boulettes, de dimension appropriés au type de dépollution visé: nettoyage des eaux marines, des eaux de ruissellement ou des eaux de lavage.

Selon des modes de réalisation particuliers, la séparation est effectuée par centrifugation, par compression ou par pressage, en mode continu ou en mode discontinu.

L'invention concerne également un procédé et un dispositif de récupération des polluants fluides, en particulier d'hydrocarbures, par mise en contact de ces polluants et des absorbants végétaux dans un espace restreint dès l'entrée des polluants, puis par traitement des absorbants imprégnés de polluant selon le procédé défini ci-dessus.

Dans un mode de réalisation particulier, le récupérateur, encore appelé séparateur d'hydrocarbures, présente au niveau de l'orifice d'entrée un récipient ajouré dans lequel les absorbants végétaux à base de fibres végétales, de préférence sous forme de boulettes ou de feuilles, sont disposés. Une telle disposition permet de retenir une part importante des polluants (hydrocarbures, huiles, COV, etc...) par absorption quasi instantanée en amont du flux de liquide circulant dans le récupérateur.

Cette disposition permet également une limitation importante des émissions de COV, et une diminution de la fréquence d'entretien des récupérateurs ou séparateurs d'hydrocarbures. L'absorbant végétal, une fois qu'il a absorbé les polluants, est recyclé selon le procédé de traitement défini plus haut.

D'autres caractéristiques et avantages de l'invention ressortiront à la lecture qui suit d'exemples de réalisation détaillés, en référence aux figures qui représentent respectivement :
- la figure 1, une vue en coupe d'un exemple de centrifugeuse schématisée pour séparer des produits polluants qu'il a absorbé, en mode discontinu;
- la figure 2, une vue en coupe schématique d'un exemple de récupérateur d'hydrocarbures avec absorption d'hydrocarbures par des absorbants végétaux.

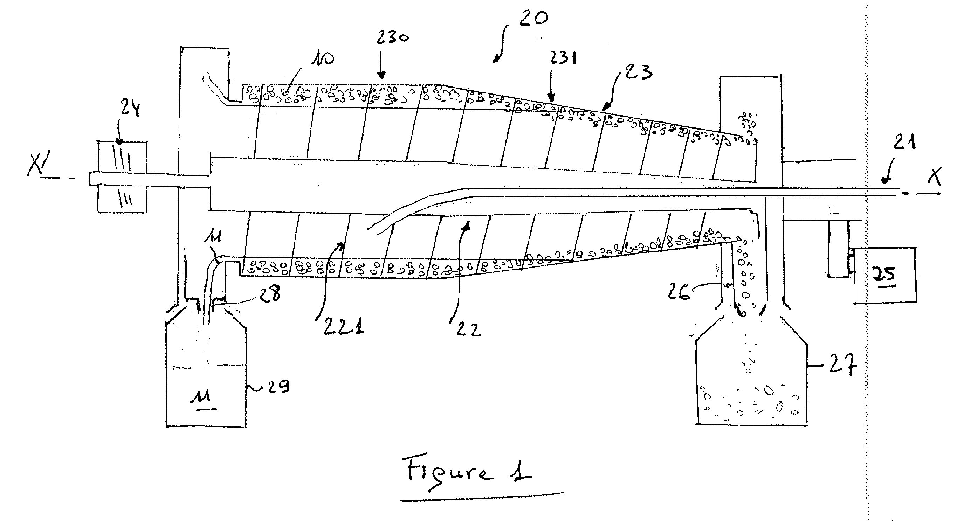

Le schéma de la figure 1 montre la récupération d'un absorbant biodégradable imprégné au départ d'hydrocarbures. L'absorbant se présente sous forme de boulettes de fibres de cellulose 10 et le récupérateur est un extracteur centrifuge 20 de séparation et de récupération de la partie hydrocarbure absorbée dans les fibres des boulettes. Si l'absorbant a été utilisé sous forme plus compacte (matelas, boudins, feuilles...), ces formes compactes sont fractionnées avant centrifugation pour former des granulés.

La centrifugeuse 20 comprend une canne d'alimentation 21 au centre d'une vis sans fin 22. Le corps 23 de la centrifugeuse comporte une partie cylindrique 230 et une partie conique 231 par où la canne 21 pénètre. Les pâles 221 a vis sans fin épouse la forme du corps 23. La vis est entraînée par un moto-réducteur 24.

Lors de la centrifugation, le moteur principal 25 entraîne en rotation le corps 23 selon l'axe X'X, horizontal en utilisation, à une vitesse telle qu'une force centrifuge de plusieurs g plaque les granulés 10 contre la paroi intérieure du corps 23. Les granulés sont expurgés du liquide absorbé de manière quasi-totale et sont évacués vers la partie conique 231 par la vis sans fin 22 entraînée par le moto-réducteur 24. Les granulés sortent ensuite par des buses 26 et sont recueillis dans un conteneur de conditionnement 27. Les conteneurs peuvent être remplacés par des moyens d'évacuation en continu.

Les granulés sont alors recyclés pour de nouvelles interventions ou dirigés dans la filière bois ou pour servir de combustible avec un faible taux de résidu de cendre et un bon indice PCI dans les industries disposant de fours ou chaudières (cimenteries, chaufferies, etc.). Les granulés peuvent également être biodégradés par ajout de biodégradants adaptés (enzymes dédiés).

Le liquide 11 composé quasi exclusivement des polluants, des hydrocarbures dans l'exemple, est récupéré par des ouïes de sortie 28 et est également déversé dans un conteneur approprié 29 ou par des moyens d'évacuation en continu. Il pourra également être recyclé pour servir de combustible industriel.

Dans une version en mode discontinue, les granulés sont centrifugés dans un réceptacle grillagé cylindrique tournant placé dans un corps cylindrique d'axe vertical en position d'utilisation. L'absorbant chargé de polluant est versé dans une ouverture supérieure du récipient grillagé. L'absorbant, sous l'effet de la force centrifuge, reste plaqué contre la paroi du récipient, alors que le polluant, expurgé de l'absorbant, est éjecté par centrifugation, traverse les orifices du récipient grillagé, et glisse le long de la paroi intérieure du corps vers une évacuation inférieure.

L'absorbant décrit ci-dessus est avantageusement utilisé, ou même réutilisé, comme dépolluant d'hydrocarbures bruts dans un récupérateur avant d'être centrifugé ou compressé pour pouvoir être recyclé.

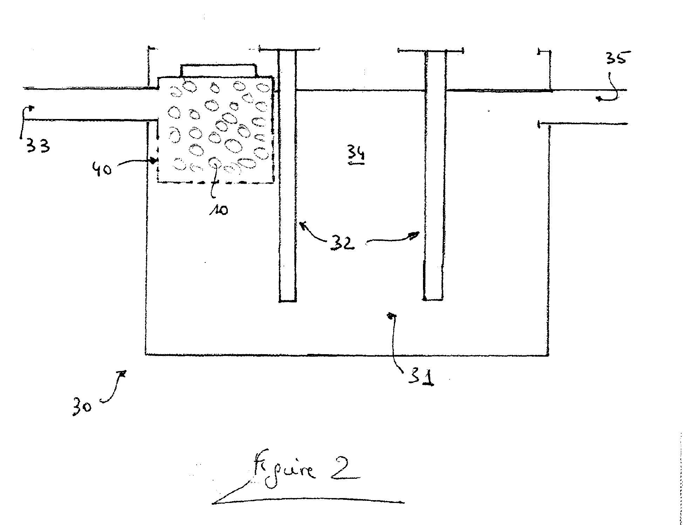

Ainsi, la figure 2 montre un schéma de récupérateur d'hydrocarbures 30 fonctionnant avec des granulés absorbants, notamment les granulés recyclés 10 issus de la centrifugeuse décrite ci-dessus.

Le récupérateur d'hydrocarbures 30 comprend principalement un bassin de décantation 31, un conduit d'alimentation 33, un conduit d'évacuation 35, des zones 34 où s'accumulent les hydrocarbures bruts et polluants plus légers que l'eau, ainsi que des déflecteurs 32 délimitants ces zones d'accumulation, deux déflecteurs et une zone 34 ayant été représentés.

Un panier grillagé 40 contenant les granulés absorbants 10 est disposé à l'extrémité du conduit d'alimentation. Le panier 40 est par exemple en acier galvanisé ou en acier inoxydable. Le liquide pollué arrivant par le conduit d'alimentation passe d'abord au travers du panier 40, dont les granulés absorbants 10 retiennent une grande partie des polluants (huiles, COV, hydrocarbures variés). Les granulés absorbent au fur et à mesure les polluants de densité inférieure à l'eau qui remontent en surface après décantation.

Le liquide qui ressort alors des paniers est moins chargé en polluants: il émet moins de COV, dépose moins de boues dans le bassin de décantation 31, et dépose moins d'hydrocarbures légers dans la zone d'accumulation 34. Ainsi, l'utilisation de ce panier 40 contenant les granulés absorbants 10 permet de diminuer l'émission de COV.

Avantageusement, un entretien régulier du récupérateur d'hydrocarbures, bacs ou fontaines de dégraissage, utilisant des solutions aqueuses détergentes permet de limiter les temps de contact, polluants - eaux - air - solutions de lavage, ainsi que les COV. La part des solvants ou hydrocarbures miscible à l'eau reste limitée dans les eaux de rejets en-dessous des normes ou dans les solutions de lavage à retraiter. En revanche, les « vidange/retraitement » onéreuses et génératrices de grandes quantités de déchets sont espacées.

La phase d'entretien peut être complétée par l'introduction d'un biodégradant adapté aux boues résiduelles du bac de décantation, de débourdeurs ou ensemble de dégraissage. Les boues peuvent être également pompées et déshydratées afin de diminuer les quantités à traiter ainsi que les coûts.

L'invention n'est pas limitée aux exemples de réalisation décrits et représentés.

Il est également possible de prévoir d'utiliser différentes compositions d'absorbant ayant la capacité de restituer facilement les polluants qu'ils ont absorbé: en fait, tout matériau biodégradable végétal, naturel ou synthétique.

La forme de l'absorbant peut être adaptée au type de pollution à traiter: granulés de dimensions variables en fonction de l'application, et de forme également adaptée: cylindrique, en feuille ou en boule, matelas, rouleau, etc.

Les méthodes physiques de séparation de l'absorbant végétal et des polluants peuvent aussi comprendre, outre la centrifugation, le pressage et la compression, tout procédé utilisé pour séparer un solide absorbant du liquide qu'il a absorbé: séparation thermique, à haute ou basse température, brassage, etc.

Les méthodes citées de récupération et de valorisation des hydrocarbures peuvent aussi s'appliquer à la séparation entre l'eau ou un liquide aqueux, et un composé non miscible à l'eau.

Par ailleurs, pour éviter la pollution d'un sol par des hydrocarbures plus légers que l'eau, et avant d'utiliser un matériau absorbant, il est avantageux de faire un apport d'eau sur la surface polluée afin de maintenir en suspension les hydrocarbures.

## Revendications

1. Procédé de traitement d'absorbants à base de fibres biodégradables imprégnés de polluants fluides, en particulier d'hydrocarbures, comportant une étape de séparation unique entre les absorbants (10) et les polluants fluides et une étape de recyclage des absorbants séparés puis reconditionnés ainsi que, parallèlement, une étape de réutilisation des polluants séparés et reconditionnés.

2. Procédé de traitement selon la revendication 1, **caractérisé en ce que** la séparation est effectuée au choix entre centrifugation, compression et pressage, en mode continu et en mode discontinu.

3. Centrifugeuse de mise en oeuvre en mode continu du procédé selon la revendication précédente, comportant un corps (23) entraîné par un moteur principal (25), une canne d'alimentation (21) au centre d'une vis sans fin (22) entraînée par un moto-réducteur 24, le corps 23 de la centrifugeuse ayant une partie cylindrique 230 et une partie conique 231, et **caractérisée en ce que** les granulés 10, plaquées contre la paroi intérieure du corps 23 et expurgées du liquide absorbé de manière quasi-totale, sont évacuées vers la partie conique 231 par la vis sans fin 22, puis sortent par des buses 26 et sont recueillies dans un conteneur de conditionnement 27, et **en ce que** le liquide composé d'hydrocarbures est récupéré par des ouïes 28 et est également déversé dans un conteneur approprié 29.

4. Absorbants spécialement adaptés à la mise en oeuvre du procédé selon la revendication 1 ou 2, **caractérisés en ce qu'**ils se présentent sous forme de matelas, de boudins, de feuilles ou de boulettes.

5. Absorbants selon la revendication précédente, **caractérisés en ce qu'**ils sont choisis parmi des fibres végétales agglomérées, en particulier à base de cellulose, et des fibres synthétiques biodégradables en particulier agglomérées.

6. Procédé de récupération de polluants fluides, en particulier d'hydrocarbures, **caractérisé par** une mise en contact de ces polluants et des absorbants végétaux selon la revendication 2 ou 3 dans un espace restreint dès l'entrée des polluants, puis par un traitement des absorbants imprégnés de polluant selon le procédé conforme aux revendications 1 ou 2.

7. Récupérateur de mise en oeuvre du procédé selon la revendication 4, comportant un conduit d'entrée () d'un liquide à dépolluer, un bassin de décantation () et un conduit d'évacuation (), **caractérisé en ce qu'**il présente au niveau de l'extrémité du conduit d'alimentation (), un récipient ajouré dans lequel les absorbants à base de fibres biodégradables sont disposés pour retenir une part importante des polluants par absorption quasi instantanée en amont du flux de liquide circulant dans le récupérateur.
